# EUROPEAN PATENT SPECIFICATION

(11) **EP 3 599 034 B1**
(45) Date of publication and mention of the grant of the patent: **18.05.2022**
(21) Application number: 18290088.6
(22) Date of filing: 24.07.2018
(51) Int. Cl.: B28B 11/04, B08B 1/00, B08B 1/02, B08B 5/02, B08B 5/04, C04B 38/10, E04C 1/41

(54) **METHOD FOR PREPARING A MINERAL FOAM MATERIAL-FILLED CONCRETE BLOCK AND APPARATUS THEREFOR**
VERFAHREN ZUR HERSTELLUNG EINES MIT MINERALSCHAUMMATERIAL GEFÜLLTEN BETONBLOCKS UND ZUGEHÖRIGE VORRICHTUNG
PROCÉDÉ DE PRÉPARATION D'UN BLOC DE BÉTON REMPLI DE MATÉRIAU MINÉRAL EN MOUSSE ET DISPOSITIF ASSOCIÉ

(43) Date of publication of application: 29.01.2020
(73) Proprietor: Holcim Technology Ltd, 8645 Jona (CH)
(72) Inventor: Blachier, Christian, F-38070 Saint-Quentin-Fallavier (FR); Refouvelet, Olivier, F-38070 Saint-Quentin-Fallavier (FR); Moulin, Adrien, F-38070 Saint-Quentin-Fallavier (FR); Ferreint, Lilian, F-38070 Saint-Quentin-Fallavier (FR); Perez, Nicolas, F-38070 Saint-Quentin-Fallavier (FR)
(74) Representative: Keschmann, Marc

(56) References cited:
- WO-A1-2005/025829
- WO-A1-2016/156971
- FR-A1- 2 758 481
- US-A- 3 819 395

## Description

The present invention relates to a method for preparing a mineral foam material-filled concrete block and an apparatus for removing mineral foam material from a top surface of a concrete block.

WO2005/025829A1 discloses such an apparatus, which comprises a conveyor and a scraping element according to the preamble of claim 6.

Concrete blocks used for the construction of buildings are typically designed to be easily stacked upon each other. A thin layer of mortar is placed by a mason on the top surface of an already placed row of concrete blocks, onto which the next row of concrete blocks is placed. Concrete blocks are therefore designed to have a geometry that facilitates this process, and that provides a regular horizontal surface to the entire set of blocks that constitute a row.

Ultra light weight mineral foams have recently been developed and used in a process that enables to fill cavities of concrete blocks with fresh mineral foam. Compared to conventional concrete blocks, concrete blocks that contain mineral foam in their cavities have a reduced thermal conductivity, which improves the thermal insulation of the final buildings. An ultra-light mineral foam suitable for the present invention as well as a method for producing said mineral foam are described in WO 2013/150148 A1. A method of filling a mineral foam into cavities of a construction block according to the preamble of claim 1 is described in WO 2016/156971 A1.

In order to maximise the thermal insulating properties of walls made of concrete elements filled with mineral foam, the cavities of the concrete blocks should be entirely filled and the external surface of the mineral foam should be flat, even, and at the same level as the external surface of the concrete block. When this is achieved, the mason can easily apply a layer of fresh mortar before laying an additional concrete element above, and optimal thermal insulation is achieved.

Also, concrete blocks or concrete cavity blocks are typically stacked onto a loading pallet on top of each other before being transported and delivered to the customers. The palletising step requires that the surfaces of the concrete blocks are flat and smooth to ensure their proper and safe storing and transport.

The palletising is done with concrete elements having a minimum strength level, however the mineral foam may at this step still be fresh, i.e. before the cement of the mineral foam has set.

Currently, when fresh mineral foam materials are used to fill concrete blocks, a manual step is required to obtain a flat surface before the mineral foam material sets and hardens. This step increases the total time and cost of manufacturing of the concrete blocks filled with mineral foam, and might cause mineral foam to spill over that needs to be carefully removed for the sake of the general aesthetics of the concrete blocks.

Alternatively, levelling the concrete blocks surface may be achieved by removing excess mineral foam material after it has set in the cavities of the concrete blocks. However this process has several disadvantages. It generates high amounts of dust that pose discomfort and potential health issues for the people involved in that manufacturing step. Also, this step increases the risk of permanently damaging the surface of the hardened mineral foam, which can easily be scratched or etched because of its very low strength, a consequence of its very low density. This alternative way increases the rate of rejects at the manufacturing plant, i.e. the number of concrete elements that cannot be commercialised because of defects.

The purpose of this invention is to solve the problems mentioned above, in particular to provide an improved method and apparatus for levelling the top surface of concrete blocks filled with mineral foam.

In order to solve these problems, the method according to the present invention comprises the following steps:
- providing a concrete block comprising at least one cavity,
- filling the at least one cavity with a volume of the mineral foam material greater than the volume of the at least one cavity,
- bringing a scraper element into contact with a top surface of the concrete block,
- moving the scraper element over the top surface of the concrete block to scrape off excess fresh mineral foam material from the top surface,
- removing the excess mineral foam material from the scraper element by suction.

By having a scraper element that is brought into contact with the top surface of the concrete block that is filled with an excess volume of mineral foam material the afore mentioned manual step to level excess mineral foam material can be replaced by an automated process, so that high numbers of concrete blocks can be appropriately treated to have a level top surface, while keeping the costs of production at a minimum. Full automation of the process according to the invention requires constantly removing the excess mineral foam material from the scraper element, which is done by suction, thereby allowing for a continuous process without the need to provide mechanical elements to remove the mineral foam material from the scraper element mechanically.

According to a preferred embodiment of the present invention and in order to further increase automation for a continuous output of mineral foam material-filled concrete cavity blocks the steps of bringing a scraper element into contact with a top surface of the concrete block and moving the scraper element over the top surface of the concrete block involve moving the concrete cavity block relative to the scraper element, preferably by means of a conveyor. Within the scope of the present invention it is of course also conceivable that the concrete blocks or concrete cavity blocks are stationary and the scraper element is moved relative to the stationary concrete blocks, however, since the scraper element, as will be later on described, is part of a complex installation and since concrete blocks often are produced in a production line already involving conveyors, the described preferred embodiment of the present invention provides a much more cost effective method of removing the excess mineral foam material from the top surface of the concrete block having at least one cavity, i.e. the concrete cavity block.

Within the context of the invention at least one cavity of the concrete block is filled with mineral foam. Preferably, a plurality of cavities are filled with mineral foam, wherein the cavities are preferably arranged successively along the direction of the moving direction of the scraper element. Preferably, a number of 3, 4, 5, 6 or more of cavities may be provided.

When producing large amounts of mineral foam material-filled concrete blocks as it is envisaged within the scope of the present invention, relatively large amounts of excess mineral foam material will accumulate in an area of the outlet of the suction line that provides said suction to remove the excess mineral foam material from the scraper element. Evidently, some kind of slurry container will be provided in the area of the outlet of the suction line to collect excess mineral foam material that has been removed, i.e. scraped off the top surface of the mineral foam material-filled concrete cavity blocks.

While part of this scraped off mineral foam material may under certain circumstances be recycled and reused to fill new concrete cavity blocks having empty cavities, part of the removed excess mineral foam material will have to be discarded. Therefore, an anti-foaming agent is preferably added to the excess mineral foam material that has been scraped off from the top surface of the concrete block, preferably after removal of the excess mineral foam material from the scraper element, as it is in accordance with a preferred embodiment of the present invention. This will keep the volume of the mineral foam material that is to be discarded as small as possible. Adding the anti-foaming agent after removal of the excess mineral foam material from the scraper element provides that no anti-foaming agent will come into contact with the mineral foam material within the cavity blocks, as it would be the case if anti-foaming agent was sprayed directly onto the scraper element.

According to a further preferred embodiment of the present invention, the scraper element is sprayed with a cleaning liquid after the step of scraping off of the excess mineral foam material from the top surface of the concrete block. This preferred measure might not be required after each and every mineral foam material-filled concrete cavity block to be treated according to the inventive method, but can be useful after a certain duration of production, because obviously it will in practice not be possible to remove all of the excess mineral foam material from the scraper element by suction. These residues then can be sprayed off the scraper element for example by water as cleaning liquid.

It is preferred when the step of scraping off is performed while the mineral foam material is still fresh, preferably within a time period after the step of filling the at least one cavity with a mineral foam material in which the mineral foam material has not set.

According to a second aspect of the invention, an apparatus for removing mineral foam material from the top surface of the concrete block is provided, the concrete block comprising at least one cavity (concrete cavity block), which comprises a conveyor and a scraper element arranged at a predetermined distance from the conveyor with a scraping edge of the scraper element facing towards the conveyor, wherein the scraper element has an opening distant from the scraping edge, the opening being connected to a suction line. When a concrete cavity block is arranged on the conveyor and moved by the conveyor relative to the scraper element, the scraper element that is arranged at a predetermined distance from the conveyor, which distance is adapted to the dimensions of the concrete cavity blocks in question, the scraper element contacts the top surface of the concrete block and is moved over the top surface of the concrete block, thereby scraping off fresh excess mineral foam material from the top surface. The removed excess mineral foam material is collected on the scraper element and will be pushed towards the opening, that is connected to the suction line, where the excess mineral foam material will be sucked into the suction line.

In order not to damage the concrete cavity block, the scraping edge is formed of a flexible strip, as it is in accordance with the preferred embodiment of the present invention. The flexibility of the scraping edge additionally has the effect of compensating for possible tolerances in the height position of the scraping element relative to the top surface of the concrete block.

It is further preferred that the flexible strip is adapted to be detachable from the scraping edge. This allows to bring the scraping edge into firm contact with the top surface of the concrete cavity block filled with excess volume of mineral foam material without damaging the concrete cavity block, providing a smooth and levelled top surface after the step of scraping off the mineral foam material and providing the possibility to easily replace the functional scraping edge as the flexible strip will be gradually worn by friction on the usually coarse concrete of the concrete cavity block.

In order to securely retain the excess mineral foam material scraped off, the scraper element is generally concave in cross section, which represents a preferred embodiment of the present invention. A generally concave cross section can also be addressed as a C-shaped cross section.

In order to improve the removal of the excess mineral foam material from the scraper element by means of suction, the inventive apparatus is according to a first alternative the invention devised in such a manner that a blower element is arranged distant from the scraper element and being directed toward the opening of the scraper element. This will help to push the mineral foam material in the direction of the opening of the scraper element, thereby facilitating its entry into the opening.

As already described relative to the method according to the present invention it is desired to spray the scraper element with a cleaning liquid. Therefore, the inventive apparatus according to a second alternative of the invention is equipped with a sprayer element that is arranged distant from the scraper element and being directed toward the opening of the scraper element.

The present invention allows for a highly automated production of mineral foam material-filled concrete cavity blocks. In this context, it is conceivable to arrange a plurality of the scraper elements adjacent to each other across the width of the conveyor. This means that the conveyor has a width that allows for arranging more than just one cavity block next to each other and carrying out the inventive method on several concrete cavity blocks simultaneously.

According to a preferred embodiment the conveyor can be comprised of a plurality of conveyor belts each allocated to one of the plurality of the scraper elements, but it is also conceivable within the scope of the present invention to provide just one conveyor belt to form a conveyor of sufficient width, in particular when it is desired to arrange several concrete cavity blocks next to each other to be treated simultaneously.

To realize a sufficiently effective apparatus with regard to high functionality and cost efficiency, it can be desirable that a plurality of the scraper elements shares a common blower element, as it is in according with a preferred embodiment of the present invention.

Preferably, and for the same reasons as stated above, also a plurality of the scraper elements can share a common sprayer element.

The mineral foam used for filling the at least one cavity of the concrete block preferably is mineral foam as described in WO 2013/150148 A1.

Preferably, the mineral foam has a base of Portland cement.

The mineral foam is preferably produced by a method comprising the following steps:
(i) separately preparing a slurry of cement and an aqueous foam,
(ii) contacting the slurry of cement with the aqueous foam to obtain a slurry of foamed cement,

The cement contained in the mineral foam may be any type of Portland cement. The suitable cements preferably comprise the cements described according to the European NF EN 197-1 Standard of April 2012 or mixtures thereof, preferably cement of the types CEM I, CEM II, CEM III, CEM IV or CEM V.

The water/cement ratio (wt/wt ratio) of the cement slurry prepared in step (i) is preferably from 0.25 to 0.7, more preferably from 0.5 to 0.7. The water/cement ratio may vary, for example due to the water demand of mineral particles possibly contained in the slurry. The water/cement ratio is defined as being the ratio by mass of the quantity of water (W) to the dry Portland cement mass (C) .

The mineral foam, in particular the cement slurry, may comprise a water reducer, such as a plasticiser or a super-plasticiser. A water reducer makes it possible to reduce the amount of mixing water for a given workability by typically 10-15%. By way of example of water reducers, mention may be made of lignosulphonates, hydroxycarboxylic acids, carbohydrates, and other specific organic compounds, for example glycerol, polyvinyl alcohol, sodium alumino-methyl-siliconate, sulfanilic acid and casein as described in the Concrete Admixtures Handbook, Properties Science and Technology, V.S. Ramachandran, Noyes Publications, 1984.

Super-plasticisers belong to a new class of water reducers and are capable of reducing water contents of mixing water, for a given workability, by approximately 30% by mass. By way of example of a super-plasticiser, the PCP super-plasticisers without an anti-foaming agent may be noted. The term "PCP" or "polyoxy polycarboxylate" is to be understood according to the present invention as a copolymer of acrylic acids or methacrylic acids and their esters of polyoxy ethylene (POE).

Preferably, the mineral foam, in particular the cement slurry, comprises 0.05 to 1%, more preferably 0.05 to 0.5% of a water reducer, a plasticiser or a super-plasticiser, percentage expressed by mass relative to the dry cement mass.

Preferably, the cement slurry does not comprise an anti-foaming agent, or any agent having the property of destabilizing an air/liquid emulsion. Certain commercial super-plasticisers may contain anti-foaming agents and consequently these super-plasticisers are not suitable for the cement slurry used to produce the mineral foam according to the invention.

Preferably, the mineral foam, in particular the cement slurry, may comprise an accelerator, preferably 0.05 to 2.5 wt.-% of an accelerator expressed as dry mass relative to dry cement mass.

According to an embodiment of the invention, other additives may be present in the mineral foam, in particular in the cement slurry or the aqueous foam. Such additives may be thickening agents, viscosifying agents, air entraining agents, setting retarders, coloured pigments, hollow glass beads, film forming agents, hydrophobic agents or de-polluting agents (for example zeolites or titanium dioxide), latex, organic or mineral fibres, mineral additions or their mixtures. Preferably, the additives do not comprise any defoaming agents.

The expression "thickening agent", is generally to be understood as any compound making it possible to maintain the heterogeneous physical phases in equilibrium or facilitate this equilibrium. The suitable thickening agents are preferably gums, cellulose or its derivatives, for example cellulose ethers or carboxy methyl cellulose, starch or its derivatives, gelatine, agar, carrageenans or bentonite clays.

According to an embodiment of the invention, the cement slurry used to produce the mineral foam may further comprise mineral particles. Preferably, the cement slurry used to produce the mineral foam may comprise 0 to 50% of mineral particles, more preferably from 5 to 40%, most preferably from 5 to 35%, the percentages being expressed by mass relative to the mass of slurry of foamed cement.

The suitable mineral particles are selected from calcium carbonate, silica, ground glass, solid or hollow glass beads, glass granules, expanded glass powders, silica aerogels, silica fume, slags, ground sedimentary siliceous sands, fly ash or pozzolanic materials or mixtures thereof.

The mineral particles may be slags (for example, as defined in the European NF EN 197-1 Standard of April 2012, paragraph 5.2.2), pozzolanic materials (for example as defined in the European NF EN 197-1 Standard of April 2012, paragraph 5.2.3), fly ash (for example, as described in the European NF EN 197-1 Standard of April 2012, paragraph 5.2.4), calcined schists (for example, as described in the European NF EN 197-1 Standard of April 2012, paragraph 5.2.5), material containing calcium carbonate, for example limestone (for example, as defined in the European NF EN 197-1 Standard paragraph 5.2.6), silica fume (for example, as defined in the European NF EN 197-1 Standard of April 2012, paragraph 5.2.7), siliceous additions (for example, as defined in the "Concrete" NF P 18-509 Standard), metakaolin or mixtures thereof.

Fly ash is generally pulverulent particles comprised in fume from thermal power plants which are fed with coal. Fly ash is generally recovered by electrostatic or mechanical precipitation.

Slags are generally obtained by rapid cooling of molten slag resulting from melting of iron ore in a blast furnace.

Silica fume may be a material obtained by the reduction of very pure quality quartz by the coal in electric arc furnaces used for the production of silicon and alloys of ferrosilicon. Silica fume is generally formed of spherical particles comprising at least 85% by mass of amorphous silica.

The pozzolanic materials may be natural siliceous and/or silico-aluminous materials or a combination thereof. Among the pozzolanic materials, natural pozzolans can be mentioned, which are generally materials of volcanic origin or sedimentary rocks, and natural calcined pozzolans, which are materials of volcanic origin, clays, shale or thermally-activated sedimentary rocks.

The aqueous foam of step (ii) preferably has air bubbles with a D50, which is less than or equal to 400 µm, preferably comprised from 100 to 400 µm, more preferably comprised from 150 to 300 pm. Preferably, the generated aqueous foam has air bubbles with a D50 which is 250 µm.

The D50 of the bubbles is measured by back scattering. The apparatus used is the Turbiscan^{®} Online provided by the Formulaction company. Measurements of the back scattering make it possible to estimate a D50 for the bubbles of an aqueous foam, by knowing beforehand the volume fraction of the bubbles and the refractive index of the solution of foaming agent.

Preferably, the foaming agent is an organic protein derivative of animal origin (such as, e.g., the foaming agent named Propump26, a powder of hydrolysed keratin, sold by the company Propump Engineering Ltd) or of vegetable origin. The foaming agents may also be a cationic surfactant (for example cetyltrimethylammonium bromide, CTAB), an ionic surfactant, an amphoteric surfactant (for example cocamidopropyl betaine, CAPB), or a nonionic surfactant, or mixtures thereof.

Preferably, the mineral foam may have a density of 20 to 300 kg/m³, more preferably from 20 to 150 kg/m³, most preferably from 30 to 80 kg/m³. Even more preferably the mineral foam according to the invention may have a density of 20 to 70 kg/m³, more preferably 20 to 60 kg/m³, most preferably 20 to 50 kg/m³. It is to be noted that the density of the slurry of foamed cement (humid density) is different to the density of the mineral foam (density of the hardened material).

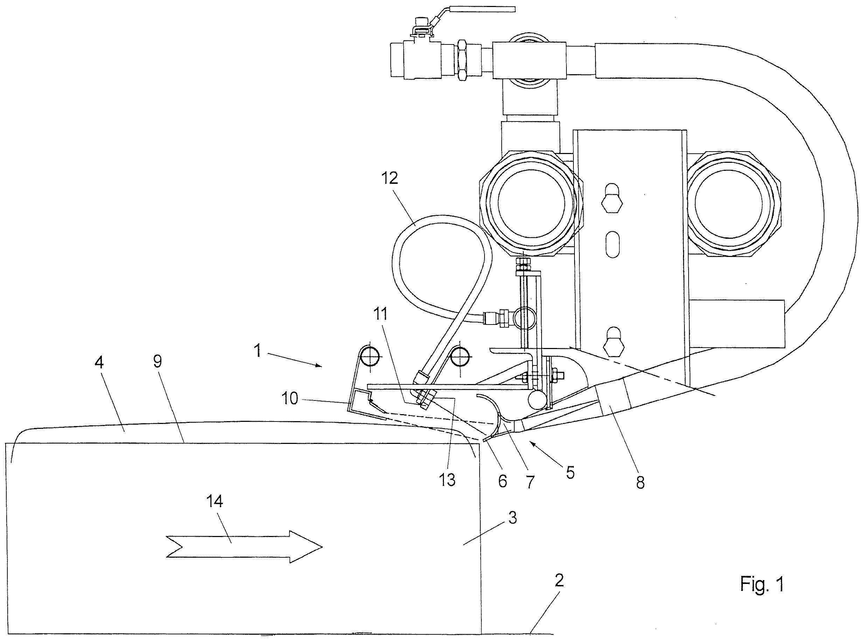

The invention will be described in more detail by reference to the attached drawing, in which Fig.1 shows the inventive apparatus adapted to carry out the method according to the present invention.

In Fig.1 the apparatus according to the present invention is generally depicted by reference.numeral 1. The apparatus 1 is comprised of a conveyor 2, on which a concrete cavity block 3 filled with an excess amount or volume of mineral foam material 4 and which can be moved relative to the scraper element 5 in the direction of arrow 14. The scraper element 5 has a cross section that is generally C-shaped or concave with a scraping edge 6 preferably formed of a flexible strip. The scraper element 5 further has an opening 7, which is connected to a suction line 8 in order to remove excess mineral foam material that is collected from the top surface 9 of the concrete cavity block 3 comprising at least one cavity (not shown). As described, the excess mineral foam material 4 scraped off will be discarded into a slurry container which is not depicted in Fig.1. The inventive apparatus 1 further comprises a blower 10, which is arranged distant from the scraper element 5 and is directed towards the opening 7 of the scraper element 5 as can be seen in Fig. 1. Further, a sprayer element 11 is provided in a manner to allow for spraying the scraper element 5 with a cleaning liquid, for example water, to clean the scraper element 5 when this becomes necessary during the production of a large amount of mineral foam material-filled concrete cavity blocks. For this purpose, the sprayer element 11 is connected to a pressure line 12, which provides cleaning liquid to the spraying nozzle 13.

## Claims

1. Method for preparing a mineral foam material-filled concrete block, the method comprising the following steps:
providing a concrete block (3) comprising at least one cavity,
filling the at least one cavity with a volume of the mineral foam material (4) greater than the volume of the at least one cavity, **characterized by**
bringing a scraper element (5) into contact with a top surface (9) of the concrete block (3),
moving the scraper element (5) over the top surface (9) of the concrete block (3) to scrape off excess fresh mineral foam material (4) from the top surface (9),
removing the excess mineral foam material (4) from the scraper element (5) by suction.

2. Method according to claim 1, **characterized in that** the steps of bringing a scraper element (5) into contact with a top surface (9) of the concrete block (3) and moving the scraper element (5) over the top surface (9) of the concrete block (3) involve moving the concrete block (3) relative to the scraper element (5), preferably by means of a conveyor (2).

3. Method according to claim 1 or 2, **characterized in that** an anti-foaming agent is added to the excess mineral foam material (4) that has been scraped off from the top surface (9) of the concrete block, preferably after removal of the excess mineral foam material (4) from the scraper element (5).

4. Method according to any one of claims 1 to 3, **characterized in that** the scraper element (5) is sprayed with a cleaning liquid after the step of scraping off of the excess mineral foam material (4) from the top surface (9) of the concrete block (3).

5. Method according to any one of claims 1 to 4, **characterized in that** the step of scraping off is performed within a time period after the step of filling the at least one cavity with a mineral foam material (4) in which the mineral foam material (4) has not hardened.

6. Apparatus for removing mineral foam material (4) from a top surface (9) of a concrete block (3), in particular for carrying out the method according to any one of claims 1 to 5, the concrete block (3) comprising at least one cavity, the apparatus comprising a conveyor (2) and a scraper element (5) arranged at a predetermined distance from the conveyor (2) with a scraping edge (6) of the scraper element (5) facing towards the conveyor (2), wherein the scraper element (5) has an opening (7) distant from the scraping edge (6), the opening (7) being connected to a suction line (8), **characterized in that** a blower element (10) is arranged distant from the scraper element (5) and being directed toward the opening (7) of the scraper element (5) or a sprayer element (11) is arranged distant from the scraper element (5) and being directed toward the opening (7) of the scraper element (5).

7. Apparatus according to claim 6, **characterized in that** the scraping edge (6) is formed of a flexible strip.

8. Apparatus according to claim 7, **characterized in that** the flexible strip is adapted to be detachable from the scraping edge (6).

9. Apparatus according to claim 6, 7 or 8, **characterized in that** the scraper element (5) is generally concave in cross section.

10. Apparatus according to any one of claims 6 to 9, **characterized in that** a plurality of the scraper elements (5) is arranged adjacent to each other across the width of the conveyor (2).

11. Apparatus according to claim 10, **characterized in that** the conveyor (2) is comprised of a plurality of conveyor belts each allocated to one of the plurality of the scraper elements (5).

12. Apparatus according to claim 10 or 11, **characterized in that** the plurality of the scraper elements (5) shares a common blower element (10).

13. Apparatus according to claim 10 or 11, **characterized in that** the plurality of the scraper elements (5) shares a common sprayer element (11).

## Patentansprüche

1. Verfahren zur Herstellung eines mit mineralischem Schaum gefüllten Betonblocks, wobei das Verfahren die folgenden Schritte umfasst:
Bereitstellen eines Betonblocks (3), der mindestens einen Hohlraum aufweist,
Füllen des mindestens einen Hohlraums mit einem Volumen des mineralischen Schaums (4), das größer ist als das Volumen des mindestens einen Hohlraums, **gekennzeichnet durch**
das In-Kontakt-Bringen eines Abstreifelements (5) mit einer oberen Fläche (9) des Betonblocks (3),
Bewegen des Abstreifelements (5) über die obere Fläche (9) des Betonblocks (3), um überschüssigen frischen mineralischen Schaum (4) von der oberen Fläche (9) abzuschaben,
Entfernen des überschüssigen mineralischen Schaums (4) von dem Abstreifelement (5) durch Absaugen.

2. Verfahren nach Anspruch 1, **dadurch gekennzeichnet, dass** die Schritte des In-Kontakt-Bringens eines Abstreifelements (5) mit einer oberen Fläche (9) des Betonblocks (3) und des Bewegens des Abstreifelements (5) über die obere Fläche (9) des Betonblocks (3) ein Bewegen des Betonblocks (3) relativ zum Abstreifelement (5), vorzugsweise mittels eines Förderers (2), umfassen.

3. Verfahren nach Anspruch 1 oder 2, **dadurch gekennzeichnet, dass** dem überschüssigen mineralischen Schaum (4), der von der oberen Fläche (9) des Betonblocks abgeschabt wurde, vorzugsweise nach dem Entfernen des überschüssigen mineralischen Schaums (4) von dem Abstreifelement (5), ein Antischaummittel zugesetzt wird.

4. Verfahren nach einem der Ansprüche 1 bis 3, **dadurch gekennzeichnet, dass** das Abstreifelement (5) nach dem Abstreifen des überschüssigen mineralischen Schaums (4) von der oberen Fläche (9) des Betonblocks (3) mit einer Reinigungsflüssigkeit besprüht wird.

5. Verfahren nach einem der Ansprüche 1 bis 4, **dadurch gekennzeichnet, dass** der Schritt des Abschabens innerhalb eines Zeitraums nach dem Schritt des Füllens des mindestens einen Hohlraums mit einem mineralischen Schaum (4) durchgeführt wird, in dem der mineralische Schaum (4) nicht ausgehärtet ist.

6. Vorrichtung zum Entfernen von mineralischem Schaum (4) von einer oberen Fläche (9) eines Betonblocks (3), insbesondere zur Durchführung des Verfahrens nach einem der Ansprüche 1 bis 5, wobei der Betonblock (3) mindestens einen Hohlraum aufweist, wobei die Vorrichtung einen Förderer (2) und ein in einem vorbestimmten Abstand von dem Förderer (2) angeordnetes Abstreifelement (5) aufweist, wobei eine Abstreifkante (6) des Abstreifelements (5) dem Förderer (2) zugewandt ist, wobei das Abstreifelement (5) eine von der Abstreifkante (6) beabstandete Öffnung (7) aufweist, die mit einer Saugleitung (8) verbunden ist, **dadurch gekennzeichnet, dass** ein Gebläseelement (10) beabstandet von dem Abstreifelement (5) angeordnet und auf die Öffnung (7) des Abstreifelements (5) gerichtet ist oder ein Sprühelement (11) beabstandet von dem Abstreifelement (5) angeordnet und auf die Öffnung (7) des Abstreifelements (5) gerichtet ist.

7. Vorrichtung nach Anspruch 6, **dadurch gekennzeichnet, dass** die Abstreifkante (6) aus einem flexiblen Streifen gebildet ist.

8. Vorrichtung nach Anspruch 7, **dadurch gekennzeichnet, dass** der flexible Streifen von der Abstreifkante (6) abnehmbar ist.

9. Vorrichtung nach Anspruch 6, 7 oder 8, **dadurch gekennzeichnet, dass** das Abstreifelement (5) im Querschnitt allgemein konkav ist.

10. Vorrichtung nach einem der Ansprüche 6 bis 9, **dadurch gekennzeichnet, dass** eine Mehrzahl der Abstreifelemente (5) über die Breite des Förderers (2) nebeneinander angeordnet ist.

11. Vorrichtung nach Anspruch 10, **dadurch gekennzeichnet, dass** der Förderer (2) aus einer Vielzahl von Förderbändern besteht, die jeweils einem der Vielzahl der Abstreifelemente (5) zugeordnet sind.

12. Vorrichtung nach Anspruch 10 oder 11, **dadurch gekennzeichnet, dass** die Mehrzahl der Abstreifelemente (5) ein gemeinsames Gebläseelement (10) aufweist.

13. Vorrichtung nach Anspruch 10 oder 11, **dadurch gekennzeichnet, dass** die Mehrzahl der Abstreifelemente (5) ein gemeinsames Sprühelement (11) aufweist.

## Revendications

1. Procédé de préparation d'un bloc de béton rempli de matériau en mousse minérale, le procédé comprenant les étapes suivantes consistant à :
fournir un bloc de béton (3) comprenant au moins une cavité,
remplir ladite au moins une cavité avec un volume de matériau en mousse minérale (4) supérieur au volume de ladite au moins une cavité, **caractérisé en ce que**
amener un élément de raclage (5) en contact avec une surface supérieure (9) du bloc de béton (3),
déplacer l'élément de raclage (5) sur la surface supérieure (9) du bloc de béton (3) pour racler l'excès de matériau en mousse minérale frais (4) de la surface supérieure (9),
enlever l'excès de matériau en mousse minérale (4) de l'élément de raclage (5) par aspiration.

2. Procédé selon la revendication 1, **caractérisé en ce que** les étapes consistant à amener un élément de raclage (5) en contact avec une surface supérieure (9) du bloc de béton (3) et à déplacer l'élément de raclage (5) sur la surface supérieure (9) du bloc de béton (3) impliquent le déplacement du bloc de béton (3) par rapport à l'élément de raclage (5), de préférence au moyen d'un convoyeur (2).

3. Procédé selon la revendication 1 ou 2, **caractérisé en ce qu'**un agent antimousse est ajouté à l'excès de matériau en mousse minérale (4) qui a été raclé de la surface supérieure (9) du bloc de béton, de préférence après l'enlèvement de l'excès de matériau en mousse minérale (4) de l'élément de raclage (5).

4. Procédé selon l'une quelconque des revendications 1 à 3, **caractérisé en ce que** l'élément de raclage (5) est pulvérisé avec un liquide de nettoyage après l'étape de raclage de l'excès de matériau en mousse minérale (4) de la surface supérieure (9) du bloc de béton (3).

5. Procédé selon l'une quelconque des revendications 1 à 4, **caractérisé en ce que** l'étape de raclage est réalisée dans une période de temps après l'étape de remplissage de ladite au moins une cavité avec un matériau en mousse minérale (4) dans lequel le matériau en mousse minérale (4) n'a pas durci.

6. Appareil pour enlever le matériau en mousse minérale (4) d'une surface supérieure (9) d'un bloc de béton (3), en particulier pour réaliser le procédé selon l'une quelconque des revendications 1 à 5, le bloc de béton (3) comprenant au moins une cavité, l'appareil comprenant un convoyeur (2) et un élément de raclage (5) disposé à une distance prédéterminée du convoyeur (2) avec un bord de raclage (6) de l'élément de raclage (5) tourné vers le convoyeur (2), dans lequel l'élément de raclage (5) a une ouverture (7) distante du bord de raclage (6), l'ouverture (7) étant reliée à une conduite d'aspiration (8), **caractérisé en ce qu'**un élément de soufflage (10) est disposé à distance de l'élément de raclage (5) et est dirigé vers l'ouverture (7) de l'élément de raclage (5) ou un élément de pulvérisation (11) est disposé à distance de l'élément de raclage (5) et est dirigé vers l'ouverture (7) de l'élément de raclage (5).

7. Appareil selon la revendication 6, **caractérisé en ce que** le bord de raclage (6) est formé d'une bande flexible.

8. Appareil selon la revendication 7, **caractérisé en ce que** la bande flexible est adaptée pour être détachable du bord de raclage (6).

9. Appareil selon la revendication 6, 7 ou 8, **caractérisé en ce que** l'élément de raclage (5) a une section transversale généralement concave.

10. Appareil selon l'une quelconque des revendications 6 à 9, **caractérisé en ce qu'**une pluralité des éléments de raclage (5) est disposée de manière adjacente les uns aux autres sur la largeur du convoyeur (2).

11. Appareil selon la revendication 10, **caractérisé en ce que** le convoyeur (2) est constitué d'une pluralité de bandes convoyeuses, chacune étant attribuée à un de la pluralité des éléments de raclage (5).

12. Appareil selon la revendication 10 ou 11, **caractérisé en ce que** la pluralité des éléments de raclage (5) partage un élément de soufflage commun (10).

13. Appareil selon la revendication 10 ou 11, **caractérisé en ce que** la pluralité d'éléments de raclage (5) partage un élément de pulvérisation commun (10).
